Europäisches Patentamt

European Patent Office

Office européen des brevets

(11) Numéro de publication:

**0 068 914**
**A1**

## (12) DEMANDE DE BREVET EUROPEEN

(21) Numéro de dépôt: 82400905.4

(22) Date de dépôt: 14.05.82

(51) Int. Cl.³: **G 01 C 19/28**

(30) Priorité: 18.05.81 FR 8109876

(71) Demandeur: **SOCIETE ANONYME DE TELECOMMUNICATIONS, 40 avenue de New York, F-75116 Paris (FR)**

(43) Date de publication de la demande: 05.01.83
Bulletin 83/1

(72) Inventeur: **Baudot, Jean-Jacques, "Les Marroniers" 15 avenue Thierry, F-92410 Ville d'Avray (FR)**

(84) Etats contractants désignés: **CH DE GB IT LI NL SE**

(74) Mandataire: **Bloch, Robert et al, 39 avenue de Friedland, F-75008 Paris (FR)**

(54) **Dispositif pour la mesure des coordonnées d'une sphère tournante et procédé de fabrication d'une partie dudit dispositif.**

(57) Dispositif pour la détermination de l'orientation de l'axe de rotation Ox d'une toupie gyroscopique. Le corps de la toupie consistant en une sphère 1 dont la surface comporte deux parties l'une absorbante de la lumière, et l'autre réfléchissante, séparées par une courbe 4, par exemple du type $\lambda = \lambda_{max} (\frac{\vartheta}{\pi} - 1)$, $\lambda$ étant la latitude du point de la courbe, et $\vartheta$ son angle, par rapport à un axe de référence autour dudit axe de rotation. Le dispositif comporte en outre, à proximité de la sphère, deux capteurs optiques 5, 6 placés respectivement sur deux axes OY, OZ perpendiculaires entre eux, et perpendiculaires à l'axe OX du cône de précision de la toupie. Les deux capteurs 5, 6 fournissent en sortie des signaux rectangulaires dont les rapports cycliques sont représentatifs des angles de site (5) et d'azimuth (A) de l'axe Ox de la toupie.

<u>Dispositif pour la mesure des coordonnées d'une sphère</u>
<u>tournante et procédé de fabrication d'une partie dudit</u>
<u>dispositif</u>

La présente invention concerne un dispositif pour la détermination de l'orientation d'un axe, mobile autour d'un point, d'un solide en rotation autour de cet axe, notamment d'une toupie gyroscopique.

Considérons une sphère, ou une portion de sphère, animée d'un mouvement de rotation propre autour d'un axe, de préférence son axe de symétrie, ledit axe étant capable d'un mouvement à deux degrés de liberté, au moyen, par exemple, d'une suspension à la Cardan, c'est-à-dire mobile autour d'un point fixe.

On sait déjà déterminer l'orientation, ou mesurer les coordonnées angulaires, d'un tel système en plaçant sur les axes de cardan des capteurs angulaires connus, tels que potentiomètres, resolvers inductifs, codeurs optiques. Cependant, il est souvent difficile d'accéder aux axes de cardan pour y installer ce type de capteur, soit parce que les dimensions générales de la suspension sont trop faibles relativement à l'encombrement des capteurs, soit parce que la suspension à la Cardan est dissimulée en partie à l'intérieur par exemple de la toupie.

De plus lorsque les deux degrés de liberté de l'axe sont autorisés non plus par une suspension à la cardan, mais par une rotule sphérique, l'accès est alors physiquement impossible.

De plus, tous les capteurs existants exercent sur les axes de la suspension des couples parasites, non négligeables et susceptibles de fausser les mesures.

La présente invention vise à pallier ces inconvénients et à proposer un dispositif de mesure dans lequel strictement

2                                    0068914

aucun couple n'est exercé sur la toupie, et se prêtant
à une miniaturisation poussée.

A cet effet, la présente invention concerne un dispositif
pour la détermination de l'orientation d'un axe, mobile
autour d'un point, d'un solide en rotation autour de cet
axe, notamment d'une toupie gyroscopique, caractérisé par
le fait qu'il comprend une portion de sphère centrée sur
ledit point dudit axe, dont la surface comporte au moins
deux parties respectivement absorbante et réfléchissante
pour un rayonnement donné, et des moyens capteurs sensibles au rayonnement réfléchi par la sphère, les parties
réfléchissante et absorbante étant conformées pour que les
moyens capteurs délivrent des signaux caractéristiques de
l'orientation dudit axe.

Dans une forme de réalisation préférée de l'invention, la
surface de la sphère est divisée en deux parties par une
courbe dont l'équation est une fonction monotone.

Dans ce cas, l'une de ces deux parties peut être réfléchissante, l'autre absorbante.

Mais au moins l'une des deux parties peut aussi avoir un
albédo constant ou progressivement variable.

L'une des deux parties de la surface de la sphère peut
également comporter des traits méridiens alternativement
absorbants et réfléchissants, l'autre partie restant par
exemple réfléchissante.

La présente invention sera mieux comprise à la lecture de
la description suivante de plusieurs exemples de réalisation préférée du dispositif, faite en référence aux dessins
annexés, et d'un exemple de procédé de réalisation de la
sphère ou de la portion de sphère dont les coordonnées
sont à mesurer. Sur les dessins :

La fig. 1 représente une vue en perspective d'une première forme de réalisation de la sphère de l'invention dont les coordonnées angulaires sont à mesurer.

La fig. 2 représente une autre vue de la sphère de la fig. 1.

La fig. 3 représente une vue d'ensemble du dispositif comprenant la sphère des figs. 1 et 2 et les capteurs.

La fig. 4 représente une vue analogue à celle de la fig. 2, mais d'une deuxième forme de réalisation de la sphère de l'invention, et

La fig. 5 représente une vue en perspective d'une troisième forme de réalisation de la sphère de l'invention.

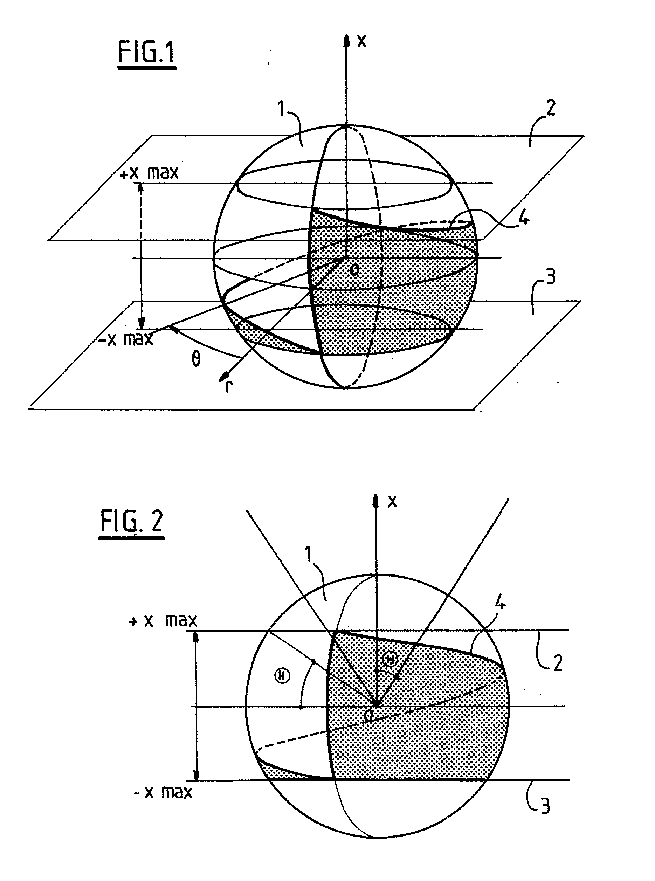

Sur la figure 1 est représentée une sphère 1, de centre 0, solidaire d'une toupie gyroscopique d'axe 0x, et destinée à être entraînée en rotation autour de cet axe 0x, dont on veut connaître les coordonnées. Sur la sphère 1 est définie une zone entre deux plans 2 (en haut) et 3 (en bas) normaux à l'axe 0x, et d'équations respectives $x = - x_{max}$ et $x = + x_{max}$, $x_{max}$ étant une valeur prédéterminée, comme on le verra plus loin.

Sur la surface de la zone précitée est définie une courbe 4, d'équation $x = f(\vartheta, \text{modulo } 2\pi)$, $\theta$ étant l'angle de rotation de la sphère 1, autour de l'axe 0x compté à partir d'un axe de référence origine 0r, et telle que $f(0) = - x_{max}$ et $f(2\pi) = + x_{max}$, et que $f(\theta)$ soit monotone sur tout l'intervalle $[0, 2\pi]$. Une fonction monotone est une fonction variant toujours dans le même sens.

Dans l'exemple décrit, l'équation de cette courbe est

$$x = x_{max} \left(\frac{\theta}{\pi} - 1\right) \quad (1) \quad \text{sur l'intervalle } 0 \leqslant x < 2\pi$$

Cette courbe divise la zone précitée en deux demi-zones en "dent de scie", et placées tête-bêche.

La demi-zone située entre la courbe 4 et le plan inférieur 3, en grisé sur les figs. 1 et 2, est agencée pour absorber en tout ou partie les rayons, par exemple lumineux, reçus par la sphère et provenant d'un éclairage ordinaire. Le reste de la sphère est, à l'opposé, en tout ou partie réfléchissant, la condition étant que les albédos de ces deux secteurs soient sensiblement différents. L'albédo est ce qu'on pourrait appeler le coefficient de réflexion.

L'axe de rotation Ox de la sphère 1 est, de façon connue, matérialisé et fixé sur une suspension à la Cardan, (non représentée) ce qui lui permet toute rotation autour des axes perpendiculaires à l'axe Ox.

On conçoit alors pourquoi cette sphère du dispositif est solidaire du gyroscope ou même en est un élément.

On sait que, lors d'un mouvement gyroscopique, l'axe de rotation propre, en l'occurrence Ox, est animé d'un mouvement de précession, délimité par un cône de demi-angle au sommet O, égal à (M), et d'axe OX.

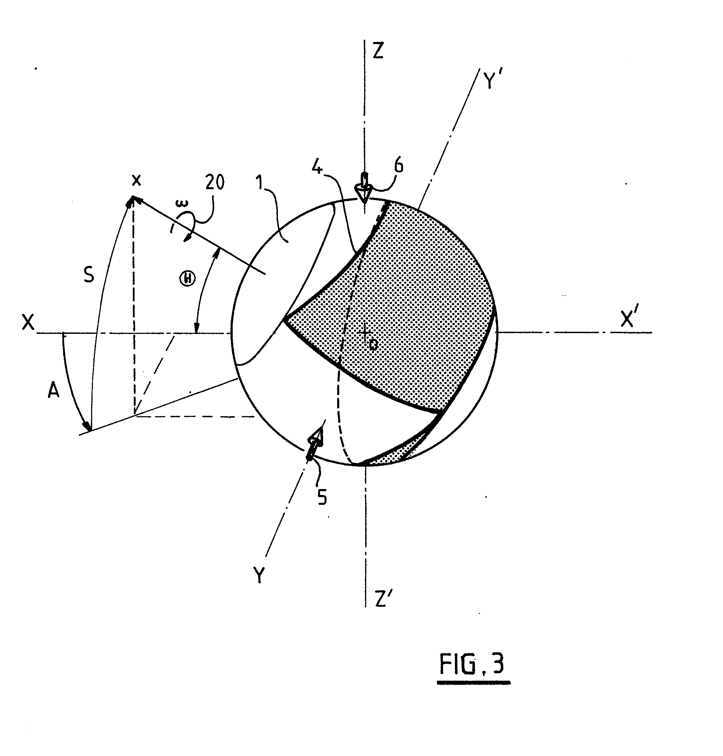

Sur la figure 3, on voit que la position de l'axe Ox est représentée d'une part par son site, c'est-à-dire par l'angle S qu'il fait avec un plan contenant l'axe OX et un axe perpendiculaire à OX, soit OY, et d'autre part par son azimuth, c'est-à-dire l'angle A qu'il fait avec un plan contenant l'axe OX, et un axe perpendiculaire à la fois à OX et à OY, cet axe étant quant à lui désigné par OZ.

OX, OY et OZ seront par la suite appelés les axes de référence du gyroscope. Ils définissent un repère orthonormé.

On vérifie aisément, par la trigonométrie sphérique, que

Cos (Ⓜ) $\leqslant$ cos $S$ . cos $A$ .

En outre, on vérifiera par la suite que, pour que la mesure de la position de l'axe Ox soit possible, il faut

$$X_{max} \geqslant R \quad sin \; (Ⓜ) \; ,$$

R étant le rayon de la sphère 1.

Le dispositif, selon l'exemple de la figure 3, comprend en outre deux capteurs ou détecteurs photoélectriques 5, 6 (fig. 3), placés à proximité immédiate de la sphère. Le capteur 5 est placé sur l'axe OY et le capteur 6 est placé sur l'axe OZ.

On conçoit que chacun des capteurs ne délivrera pas le même signal suivant qu'il fait face à une partie absorbante ou réfléchissante.

Ainsi, suivant la position de l'axe Ox par rapport à l'axe de référence OX, position déterminée par les angles A et S, on comprend que, à vitesse donnée de rotation $\omega$ de la sphère 1 autour de l'axe Ox, les zones absorbantes définies plus haut feront face plus ou moins longtemps à chacun des capteurs.

On obtient finalement, en sortie de chacun des capteurs, un signal périodique rectangulaire dont la période instantanée est égale à $\frac{2\pi}{\omega}$ , et dont le rapport cyclique est fonction de l'azimuth et du site de l'axe Ox.

On démontre, par des calculs simples de trigonométrie sphérique que, les capteurs étant placés aux endroits précités, les équations suivantes sont vérifiées :

pour le capteur 5 : $(2\frac{\mathcal{C}}{T} - 1) = \dfrac{\sin S}{\sin|S\,max|} \equiv \cos \alpha_2$

pour le capteur 6 : $(2\frac{\mathcal{C}}{T} - 1) = \dfrac{\sin A \cos S}{\sin|S\,max|} \equiv \cos \alpha_1$

$\frac{\mathcal{C}}{T}$ étant le rapport cyclique de l'onde rectangulaire fournie par chacun des capteurs, et plus précisément le rapport entre la durée $\mathcal{C}$ pendant laquelle le secteur absorbant fait face au capteur correspondant, et la durée totale $T$ d'une révolution de la sphère 1 et cos $\alpha_1$ et cos $\alpha_2$ sont les cosinus directeurs instantanés de l'axe Ox.

On sait parfaitement, par des techniques électroniques usuelles, obtenir à partir d'un signal rectangulaire son rapport cyclique. Quand aux cosinus directeurs, ce sont les cosinus des angles $\alpha_1$ et $\alpha_2$ que fait l'axe Ox respectivement avec les axes OY et OZ.

Pour que la mesure soit correctement effectuée, il faut que chaque capteur reste en permanence face à la zone de la sphère délimitée par les plans 2 et 3. En effet, dans le cas contraire, au moins un des deux capteurs délivrerait un signal non significatif, car il ferait face au moins une fois par tour à un secteur non significatif de la sphère. Il faut donc, comme on l'a dit plus haut, et si Ⓜ est l'angle de précession maximal, c'est-à-dire le demi-angle au sommet O du cône de précession, que la relation suivante soit respectée :

$$x_{max} = R \sin Ⓜ .$$

On peut encore simplifier les calculs précédents en définissant maintenant la courbe 4 par l'équation :

$\lambda = \lambda_{max} \left( \dfrac{\theta}{\pi} - 1 \right)$ pour $\theta$ compris dans l'intervalle

$$[0, \ 2\pi], \qquad\qquad (2)$$

où $\lambda$ représente non plus l'abcisse du point de la courbe, mais sa latitude; les calculs donnent alors :

pour le capteur 5 : $\left( 2\dfrac{\tau}{T} - 1 \right) = \dfrac{S}{|S_{max}|} \equiv \cos \alpha_2$

pour le capteur 6 : $\left( \dfrac{2\tau}{T} - 1 \right) = \dfrac{A.\cos S}{|S_{max}|} \equiv \cos \alpha_1$

Il est à noter que les capteurs 5 et 6 pourraient ne pas se trouver sur les axes OY et OZ. Les valeurs précédentes pourraient bien être obtenues, mais au moyen de calculs plus complexes de trigonométrie sphérique.

On notera que les plans 3 et 4 pourraient être écartés jusqu'à devenir les plans tangents à la sphère en ses pôles.

On a donc décrit un premier exemple de dispositif de mesure permettant, sous certaines conditions, de mesurer plus ou moins précisément les cosinus directeurs de l'axe de rotation propre du gyroscope, mais qui présente cependant des inconvénients, en particulier le fait que $T$ et $\tau$ dépendent de la vitesse de rotation du gyroscope.

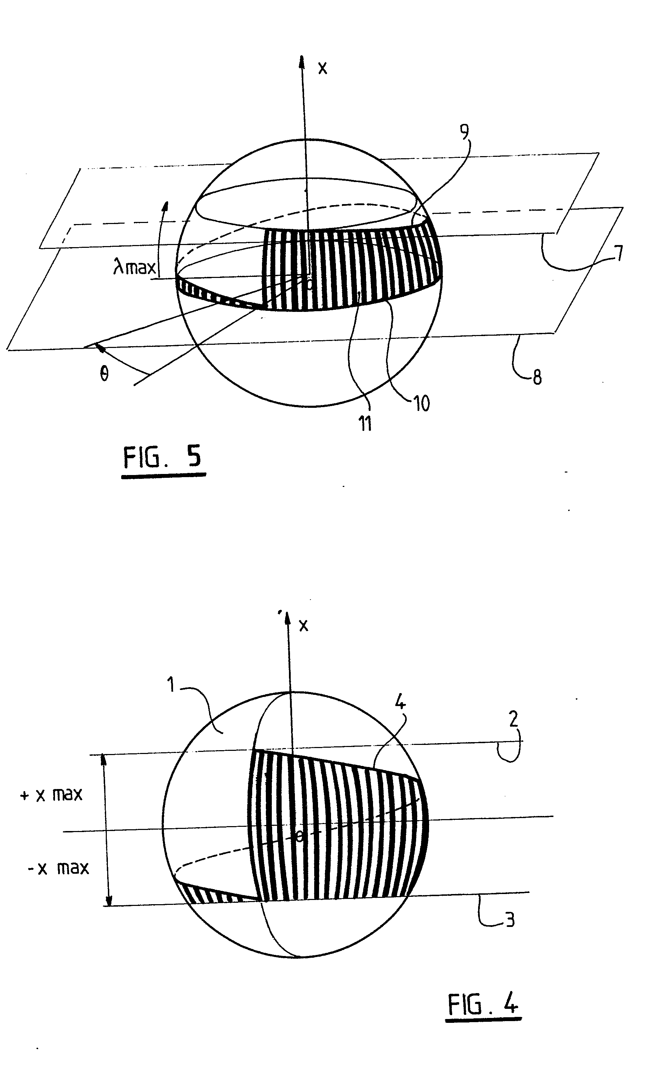

Un second exemple de réalisation a pour but de supprimer cet inconvénient. Sur la fig. 4, on voit que la zone absorbante (en grisé sur les figs. 1 à 3) est remplacée par une succession de traits méridiens, alternativement absorbants et réfléchissants, d'épaisseurs égales, et s'étendant de la courbe 4 vers le plan inférieur 3.

Ainsi on peut substituer à la mesure précédente de $T$ et $\tau$ un comptage, par exemple celui du nombre de zones absorbantes qui ont fait face aux détecteurs pendant une révolution, les signaux fournis à la sortie des détecteurs étant sous forme de trains d'impulsions.

8                                    0068914

On comprend alors que la mesure ne dépend plus de la vitesse de rotation du gyroscope.

En effet il suffit, dans les calculs précédents, de remplacer $\mathsf{T}$ par le nombre maximum de traits absorbants sur la sphère, c'est-à-dire dans le cas présent, par le nombre de traits dans le plan 3 ($x = -x_{max}$ ou $\lambda = - \lambda_{max}$) et $\mathsf{t}$ par le nombre de traits absorbants comptés, à savoir le nombre d'impulsions de chaque train.

On notera qu'au lieu de considérer deux demi-zones d'albédos différents ou une demi-zone pourvue de traits méridiens alternativement absorbants et réfléchissants, on pourrait également prévoir une demi-zone à albédo progressivement variable, selon une loi prédéterminée.

Une variante de dispositif selon l'invention est représentée sur la fig. 5.

Dans cette variante, la portion de sphère est délimitée par deux plans 7, 8 d'équations respectives $\lambda = + \lambda_{max}$ et $\lambda = 0$.

La courbe 9, d'équation $\lambda = f ( \theta, mdd\, \pi )$ est alors définie par une fonction monotone telle que $f (0) = \lambda_{max}$ et $f (2 \pi) = 0$.

On pourra par exemple, choisir :

$$\lambda = \lambda_{max} \left(\frac{\theta}{2\pi} - 1\right) \qquad\qquad (3)$$

où $\lambda$ représente la latitude du point de la courbe, ou encore :

$$x = x_{max} \left(\frac{\theta}{2\pi} - 1\right) \qquad\qquad (4)$$

où $x$ représente l'abscisse du point de la courbe, telle que $\lambda_{max}$ soit la latitude du point correspondant à une abscisse $x_{max}$.

De même, des traits méridiens, alternativement absorbants 10 et réfléchissants 11 sont disposés entre la courbe 9 et le plan 8.

Cette variante nécessite cependant l'emploi sur chaque axe OY et OZ de deux capteurs diamétralement opposés (non représentés).

Dans ce cas, quels que soient l'azimuth et le site de l'axe de rotation du gyroscope, seul un des deux capteurs d'une même paire verra défiler les traits méridiens.

A partir du signal de ce capteur, sera obtenue la valeur absolue de l'angle A ou S, suivant le couple de capteurs considéré; le signe de cet angle, quant à lui, changera selon que c'est l'un ou l'autre des capteurs d'une même paire qui voit défiler les traits.

Cette variante permet donc de fournir un dispositif tout aussi efficace que celui précédemment décrit, et utilisable dans le cas où il est impossible de prévoir pour le gyroscope, ou la toupie, une portion de sphère s'étendant de part et d'autre de son équateur.

En outre, dans les dispositifs décrits ci-dessus, on a envisagé de délimiter la zone absorbante ou striée par une seule courbe, de période $2\pi$.

On peut également concevoir de définir autour de la portion de sphère non plus une courbe, mais un nombre entier de courbes, par exemple n courbes dont les équations sont :

$$\lambda = \lambda_{max} \left(\frac{n\theta}{\pi} - 2i - 1\right)$$

sur l'intervalle $\left[\frac{2i\pi}{n}, \frac{2(i+1)\pi}{n}\right]$ pour i = 0,...,n-1 (5)

L'avantage d'un tel modèle se situe dans le fait que le comptage est effectué dans ce cas n fois par tour, au lieu de une fois, comme précédemment. Les coordonnées de l'axe de rotation sont ainsi déterminées avec une plus grande précision.

On décrit, ci-dessous, quelques exemples de réalisation du dispositif de l'invention.

Exemple 1

On trace, sur une sphère de diamètre 50 mm, 128 traits réfléchissants, et autant de traits absorbants, délimités par la courbe telle que représentée sur la figure 1 et telle que $\lambda_{max} = 30°$.

La largeur de chaque trait est de 0,61 mm, et l'incrément de longueur entre deux traits absorbants de 0,2 mm.

Pour que la mesure soit de précision optimale, il faut que le diamètre de la partie sensible des détecteurs soit au plus égale à la plus faible de ces deux dimensions, 0,2 mm dans le cas présent.

Dans ce cas, toutefois, la précision maximale théorique n'est pas atteinte du fait qu'avec ce détecteur de diamètre 0,2 mm, une cadence d'échantillonnage plus rapide qu'avec des traits de 0,61 mm pourrait être obtenue.

Exemple 2

On trace, sur une sphère de diamètre 50 mm, 3 groupes de 128 traits réfléchissants, et autant de traits absorbants répartis respectivement entre les 3 courbes définies par l'équation (5) avec n = 3 et $\lambda_{max} = 30°$.

On obtient donc de façon identique à l'exemple 1, un incrément de longueur des traits dans chaque groupe de 0,2 mm. Mais dans le présent exemple, on comprend bien que la largeur de ces traits n'est plus que d'environ 0,2 mm également. Ainsi avec un détecteur de diamètre 0,2 mm, une précision optimale est obtenue tant pour la détection de la fin de la zone striée que pour la cadence d'échantillonnage.

On mesure alors la position de l'axe de rotation, par ses cosinus directeurs, trois fois par tour.

De façon plus générale, il est chaque fois possible, pour améliorer la précision, de choisir un nombre de courbes n tel que, pour un nombre donné de traits dans chaque secteur délimité par ces courbes, l'incrément de longueur des traits et leur largeur soient aussi proches l'un de l'autre que possible.

On peut ici démontrer que ce nombre n ne dépend en fait que de la valeur de $\lambda_{max}$ choisie, c'est-à-dire, indirectement, de la valeur autorisée de l'angle de précession du gyroscope.

Soit n le nombre de courbes autour de la sphère, n étant à choisir, N représente le nombre de traits absorbants dans chacun des n secteurs délimités par ces courbes. La longueur maximale $\ell$ des traits est en fait la longueur de l'arc méridien séparant les plans $\lambda = \lambda_{max}$ et $\lambda = -\lambda_{max}$. Si R est le rayon de la sphère, alors $\ell = 2 \lambda_{max} \cdot R$.

L'incrément de longueur des traits est alors

$$\frac{2 \lambda_{max} \cdot R}{N}$$

0068914

Quant à la largeur des traits, elle vaut

$$\frac{2\pi.R}{n} \times \frac{1}{2N} \quad , \quad \frac{2\pi R}{n} \quad \text{représentant la longueur}$$

maximale de chacun des n secteurs, transversalement aux traits, et 2N le nombre total de traits (absorbants et réfléchissants).

La précision maximale est obtenue lorsque

$$\frac{2\lambda_{max}.R}{N} = \frac{2\pi.R}{n} . \frac{1}{2N} \quad \text{et que ces deux valeurs sont}$$

égales au diamètre du détecteur. On obtient ainsi

$$n = \frac{2\pi}{4\lambda_{max}}$$

Les calculs ci-dessus sont également valables lorsque les secteurs considérés contiennent non plus une succession de traits alternativement absorbants et réfléchissants, mais une surface totalement absorbante, à l'opposé du reste de la sphère.

En outre, on a décrit ci-dessus plusieurs formes de réalisation du dispositif, permettant de ne mesurer que la position de l'axe de rotation propre du gyroscope, sans connaissance de ses coordonnées instantanées. Il est cependant envisageable que les signaux fournis à la sortie des détecteurs puissent être représentatifs de la position instantanée du gyroscope. En effet, on conçoit qu'à l'instant où un détecteur cesse de faire face à la région striée, c'est-à-dire à l'instant où le détecteur coupe la courbe, par exemple la courbe d'équation (2) on connaît l'angle dont a tourné le gyroscope, par rapport à la position de début de comptage, à partir du nombre de raies absorbantes compté.

Bien sûr, il faut pour cela que le sens de rotation du gyroscope soit tel que ce soit par les traits de plus grande longueur que commence le comptage (sens de la flèche 20 sur la fig. 3), afin de disposer d'une référence. En effet, quelle que soit la position de l'axe de rotation, Ox, le début de la détection de la zone striée correspond alors toujours à $\theta = 0$.

Comme on l'a dit, le fonctionnement du dispositif dans sa version perfectionnée, est basé sur le fait que la sphère, ou la portion de sphère, comporte des secteurs alternativement réfléchissants et absorbants. De plus, un graphisme d'une grande précision est nécessaire. Cependant, la sphère n'étant pas une surface développable, on ne peut dans le cas présent utiliser les techniques connues de gravure utilisant un masque et un vernis photosensible.

Un exemple de procédé de gravure de la sphère est décrit ci-après.

On part d'une sphère nickelée et revêtue sur toute sa surface d'une fine couche d'or, puis d'un vernis photosensible.

On enveloppe la sphère, tangentiellement en son équateur, d'un masque cylindrique vertical comportant une fente verticale, calibrée en largeur suivant le cercle méridien de tangence, c'est-à-dire pour que sa projection orthogonale sur la sphère soit de largeur constante. La fente peut être partiellement ou entièrement masquée par un masque mobile.

La sphère est alors entraînée en rotation, simultanément avec le masque mobile.

Puis, à intervalles réguliers, on applique sur la sphère, à travers la fente, un rayonnement ultra-violet qui insole localement le vernis.

Le déplacement du masque mobile et de la sphère est tel qu'alors, les régions insolées consistent en des bandes méridiennes, de largeur constante et s'étendant entre la courbe définie par l'une des équations (1) à (4) et le plan de délimitation inférieur correspondant.

Puis on dépouille le vernis et on attaque, de façon chimique, la couche d'or apparaissant dans les régions insolées, pour laisser apparaître le nickel. Le nickel est alors noirci de façon électrolytique et enfin, le vernis résiduel est éliminé. On obtient ainsi une succession de traits méridiens constitués alternativement d'or poli et de nickel noirci, c'est-à-dire alternativement réfléchissants et absorbants.

Bien entendu on peut grâce à ce procédé réaliser toutes les sphères correspondant aux formes de réalisation décrites plus haut par un choix approprié de la largeur de la fente du masque cylindrique, et des évolutions du masque mobile en fonction de la rotation de la sphère. C'est même comme cela qu'on opère également pour obtenir la sphère de la forme de réalisation de la figure 1, en insolant en permanence durant le déplacement de la sphère et du masque mobile.

Enfin, des modifications pourront être apportées au dispositif et au procédé selon l'invention, sans sortir de son cadre, notamment en ce qui concerne la structure et l'agencement des zones réfléchissantes et absorbantes, le type de détecteur, etc.

Il est cependant à noter que les détecteurs pourront par exemple être du type à fibre optique, la section de la fibre de lecture étant placée au voisinage immédiat de la surface de la sphère.

Toutefois, l'invention telle que décrite ci-dessus n'est pas limitée aux rayonnements visibles et s'applique également aux rayonnements infra-rouge.

En outre, on ne sortirait pas du cadre de l'invention en ne prévoyant qu'un seul capteur pour, cependant, n'obtenir qu'une seule coordonnée de l'axe dont l'orientation est à déterminer.

Revendications

1. Dispositif pour la détermination de l'orientation d'un axe, mobile autour d'un point, d'un solide en rotation autour de cet axe, notamment d'une toupie gyroscopique, caractérisé par le fait qu'il comprend une portion de sphère centrée sur ledit point dudit axe, dont la surface comporte au moins deux parties respectivement absorbante et réfléchissante pour un rayonnement donné, et des moyens capteurs sensibles au rayonnement réfléchi par la sphère, les parties réfléchissantes et absorbantes étant conformées pour que les moyens capteurs délivrent des signaux caractéristiques de l'orientation dudit axe.

2. Dispositif selon la revendication 1, dans lequel la surface de la sphère est divisée en deux parties par une courbe dont l'équation est une fonction monotone.

3. Dispositif selon la revendication 2, dans lequel l'une des deux parties de la surface de la sphère est réfléchissante et l'autre absorbante.

4. Dispositif selon la revendication 2, dans lequel au moins l'une des deux parties a un albédo progressivement variable.

5. Dispositif selon la revendication 2, dans lequel l'une des deux parties de la surface de la sphère comporte des traits méridiens alternativement absorbants et réfléchissants.

6. Dispositif selon l'une des revendications 2 à 5, dans lequel ladite équation définissant la latitude d'un point de la courbe est :

$$\lambda = \lambda_{max} \left( \frac{\varrho}{\pi} - 1 \right)$$

7. Dispositif selon la revendication 1, dans lequel la surface de la sphère est divisée en 2n parties par n courbes dont les équations sont des fonctions monotones.

8. Dispositif selon la revendication 7, dans lequel les équations, définissant la latitude d'un point des courbes, sont

$$\lambda = \lambda_{max} \left( \frac{4\theta}{\pi} - 2i - 1 \right)$$

9. Dispositif selon la revendication 8, dans lequel n est choisi voisin du rapport

$$\frac{2\pi}{4\lambda_{max}}$$

10. Dispositif selon l'une des revendications 1 à 9, dans lequel le solide est animé d'un mouvement de précession et il est prévu deux capteurs situés dans le plan passant par le centre de la sphère et perpendiculaire à l'axe du cône de précession du solide.

11. Dispositif selon l'une des revendications 1 à 5, dans lequel ladite équation, définissant la latitude d'un point de la courbe est

$$\lambda = \lambda_{max} \left( \frac{\theta}{2\pi} - 1 \right) ,$$

et il est prévu deux paires de capteurs.

12. Procédé de gravure d'une portion de sphère du dispositif, selon l'une des revendications 1 à 11, caractérisé par le fait qu'on dispose autour de la portion de sphère un masque comportant une fente, on entraîne la sphère en rotation en synchronisme avec un masque mobile agencé pour masquer ladite fente de façon variable, on éclaire la portion de sphère à travers la fente, le rayonnement parvenant sur celle-ci étant agencé pour insoler un vernis photosensible, on dépouille le vernis, et on met en oeuvre des moyens pour rendre absorbantes les zones de la sphère qui ont été dépouillées, c'est-à-dire préalablement insolées, le reste de la surface de la sphère étant en un matériau réfléchissant.

0068914

FIG.1

FIG. 2

FIG.3

0068914

FIG. 5

FIG. 4

0068914

**Office européen des brevets**

**RAPPORT DE RECHERCHE EUROPEENNE**

Numéro de la demande

EP 82 40 0905

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | GB-A-1 399 607 (B.A.C.)<br><br>* Figures; page 1, ligne 18 - page 2, ligne 20 *<br><br>--- | 1-3,6-11 | G 01 C 19/28 |
| A | GB-A-1 086 539 (D.B.A.)<br><br>* Figures; page 2, lignes 50-127 *<br><br>--- | 1-3,6-11 | |
| A | US-A-3 328 595 (TODD)<br><br>* Abrégé; figures *<br><br>--- | 1-3,8-11 | |
| A | US-A-3 239 673 (UNRUH)<br>* Figure 2 *<br><br>----- | 5 | |

**DOMAINES TECHNIQUES RECHERCHES (Int. Cl. 3)**

G 01 C 19
G 01 D 5

Le présent rapport de recherche a été établi pour toutes les revendications

| Lieu de la recherche | Date d'achèvement de la recherche | Examinateur |
|---|---|---|
| LA HAYE | 14-09-1982 | LLOYD P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82